# EUROPEAN PATENT APPLICATION

(11) **EP 3 778 743 A1**
(43) Date of publication of application: **17.02.2021**
(21) Application number: 20167602.0
(22) Date of filing: 01.04.2020
(51) Int. Cl.: C08J 11/04, C08J 11/18, C08J 11/24, C08J 5/18, B29B 17/02, C08L 67/02

(54) **POLYESTER FILM AND METHOD FOR MANUFACTURING THE SAME**

(30) Priority: 14.08.2019 TW 108128832
(71) Applicant: NAN YA PLASTICS CORPORATION, Taipei (TW)
(72) Inventor: YANG, Wen-Cheng, Taipei (TW); LIAO, Te-Chao, Taipei (TW); HSIAO, Chia-Yen, Taipei (TW); YUAN, Ching-Yao, Taipei (TW); HSIEH, Yu-Chi, Taipei (TW)
(74) Representative: Durán-Corretjer, S.L.P.

(57) **Abstract**

A polyester film and a method for manufacturing the polyester film are provided. The method for manufacturing a polyester film by using a recycled plastic material includes the following steps. A part of the recycled plastic material is physically reproduced to obtain a physically regenerated polyester resin. Another part of the recycled plastic material is chemically reproduced to obtain a chemically regenerated polyester resin. A polyester composition including the physically regenerated polyester resin and the chemically regenerated polyester resin is prepared. Based on a total weight of the polyester composition being 100 wt%, a weight of the chemically regenerated polyester resin is larger than or equal to 5 wt%. The polyester film is manufactured by using the polyester composition. Based on a total weight of the polyester film being 100 wt%, a total amount of the physically regenerated polyester resin and the chemically regenerated polyester resin is from 10 wt% to 100 wt%.

## Description

### CROSS-REFERENCE TO RELATED PATENT APPLICATION

This application claims the benefit of priority to Taiwan Patent Application No. 108128832, filed on August 14, 2019. The entire content of the above identified application is incorporated herein by reference.

Some references, which may include patents, patent applications and various publications, may be cited and discussed in the description of this disclosure. The citation and/or discussion of such references is provided merely to clarify the description of the present disclosure and is not an admission that any such reference is "prior art" to the disclosure described herein. All references cited and discussed in this specification are incorporated herein by reference in their entireties and to the same extent as if each reference was individually incorporated by reference.

### FIELD OF THE DISCLOSURE

The present disclosure relates to a polyester film and a method for manufacturing the polyester film, and more particularly to the polyester film and the method for manufacturing the polyester film by using both of a physically regenerated polyester resin and a chemically regenerated polyester resin.

### BACKGROUND OF THE DISCLOSURE

Recently, the usage of plastic products is drastically increasing, resulting in a lot of plastic waste to be generated. Since plastic is hard to be degraded, so that recycling plastic waste and a method of processing the recycled plastic is particularly important.

Among the recycled plastic, polyethylene terephthalate (PET) is in the majority. An amount of PET in the recycled plastic is approximately 52.4 %. Therefore, the recycled PET is taken as an illustrated example below. Due to the great amount of the recycled PET, technical researchers in the field have no choice but to develop a method to process the recycled PET.

In a conventional technology, a most common method to regenerate PET is through a physical (mechanical) way. Firstly, a clean recycled PET is cut into pieces, melted at high temperature, and extruded by an extruder. Then, a regenerated PET aggregate (also known as r-PET) is formed.

With a high demand for environmental protection, a large amount of the r-PET with high quality is needed, so as to maintain a certain proportion of the r-PET used when manufacturing PET products. In the current industry, the r-PET is manufactured by a physical reproduction method. However, functional components, such as lubricants and antistatic adhesives, cannot be added to the process of the physical regeneration method. Therefore, a non-regenerated PET virgin aggregate, the lubricants, and the antistatic adhesives have to be additionally added so as to manufacture the PET products.

However, adding the non-regenerated PET virgin aggregate results in a decrease of the proportion of the r-PET in the PET products. In other words, the PET products in the conventional technology cannot be solely manufactured with the r-PET without adding other non-regenerated PET virgin aggregates. If the proportion of the r-PET is lower than criteria of environmental protection regulations, the PET products are unable to obtain an eco-labeling. In addition, the PET virgin aggregate used in the process for manufacturing the PET products would end up as PET to be recycled and processed, and the problem of reusing the recycled PET would still exist.

### SUMMARY OF THE DISCLOSURE

In response to the above-referenced technical inadequacies, the present disclosure provides a polyester film and a method for manufacturing the polyester film.

In one aspect, the present disclosure provides a method for manufacturing a polyester film. The method for manufacturing the polyester film by using a recycled plastic material includes steps of: physically reproducing a part of the recycled plastic material to obtain a physically regenerated polyester resin; chemically reproducing another part of the recycled plastic material to obtain a chemically regenerated polyester resin; preparing a polyester composition including the physically regenerated polyester resin and the chemically regenerated polyester resin; based on a total weight of the polyester composition being 100 wt%, a weight of the chemically regenerated polyester resin being larger than or equal to 5 wt% of the polyester composition; manufacturing the polyester film by using the polyester composition; based on a total weight of the polyester film being 100 wt%, a total amount of the physically regenerated polyester resin and the chemically regenerated polyester resin ranging from 10 wt% to 100 wt%.

In certain embodiments, the present disclosure provides the method for manufacturing the polyester film. Based on the total weight of the polyester composition being 100 wt%, the amount of the physically regenerated polyester resin is from 10 wt% to 90 wt% and the amount of the chemically regenerated polyester resin is from 10 wt% to 90 wt%.

In certain embodiments, the present disclosure provides the method for manufacturing the polyester film. The step of chemically reproducing another part of the recycled plastic material further includes: depolymerizing the recycled plastic material to obtain a raw material mixture, and repolymerizing the raw material mixture to obtain the chemically regenerated polyester resin.

In certain embodiments, the present disclosure provides the method for manufacturing the polyester film. The step of repolymerizing the raw material mixture further includes: adding an antistatic adhesive to the raw material mixture. The antistatic adhesive is a complex including alkaline metal or alkaline earth metal.

In certain embodiments, the present disclosure provides the method for manufacturing the polyester film. The step of repolymerizing the raw material mixture further includes: adding a lubricant to the raw material mixture and then repolymerizing the raw material mixture. The lubricant is selected from the group consisting of silicon dioxide, polystyrene, polymethyl methacrylate, silicone rubber, acrylic, and any combination thereof. The polyester composition further includes 0.01 wt% to 1 wt% of the lubricant so that a transparency of the polyester film is larger than or equal to 85 %; and a particle size of the lubricant is smaller than 2 µm.

In certain embodiments, the present disclosure provides the method for manufacturing the polyester film. A haze of the polyester film is smaller than or equal to 5 %.

In certain embodiments, the present disclosure provides the method for manufacturing the polyester film. The step of repolymerizing the raw material mixture further includes: adding a colored pigment to the raw material mixture and then repolymerizing the raw material mixture. The polyester composition further includes 10 ppm to 10 wt% of the colored pigment.

In certain embodiments, the present disclosure provides the method for manufacturing the polyester film. The step of repolymerizing the raw material mixture further includes: adding a white compound to the raw material mixture and then repolymerizing the raw material mixture. The polyester composition further includes 5 wt% to 40 wt% of the white compound.

In certain embodiments, the present disclosure provides the method for manufacturing the polyester film. The white compound is selected from the group consisting of titanium dioxide, barium sulfate, calcium carbonate, and any combination thereof.

In certain embodiments, the present disclosure provides the method for manufacturing the polyester film. The white compound includes titanium dioxide, barium sulfate, and calcium carbonate. An amount of titanium dioxide in the white compound ranges from 0.01 wt% to 80 wt%, an amount of barium sulfate in the white compound ranges from 0.01 wt% to 80 wt%, and an amount of calcium carbonate in the white compound ranges from 0.01 wt% to 80 wt%.

In certain embodiments, the present disclosure provides the method for manufacturing the polyester film. The step of repolymerizing the raw material mixture further includes the step of adding a matte additive and then repolymerizing the raw material mixture. The matte additive is selected from the group consisting of silicon dioxide, silicon rubber, acrylic, and any combination thereof. The polyester composition includes 500 ppm to 20 wt% of the matte additive so that the haze of the polyester film ranges from 0.1 % to 90 %.

In certain embodiments, the present disclosure provides the method for manufacturing the polyester film. The step of repolymerizing the raw material mixture further includes the step of adding a degradable material to the raw material mixture and then repolymerizing the raw material mixture; the polyester composition includes 5 wt% to 90 wt% of the degradable material.

In certain embodiments, the present disclosure provides the method for manufacturing the polyester film. The step of physically reproducing a part of the recycled plastic material further includes the step of adding a lubricant to the part of the recycled plastic material. A particle size of the lubricant is larger than 2 µm.

In certain embodiments, the present disclosure provides the method for manufacturing the polyester film. The step of physically reproducing a part of the recycled plastic material further includes the step of adding an organic additive to the part of the recycled plastic material. The recycled plastic material is selected from the group consisting of: polyethylene, polypropylene, poly(4-methylpentene), and any combination thereof.

In one aspect, the present disclosure provides a polyester film. The polyester film is manufactured by the method for manufacturing the polyester film mentioned above. The polyester film includes 10 wt% to 100 wt% of a regenerated polyester resin including a physically regenerated polyester resin and a chemically regenerated polyester resin. Based on a total weight of the regenerated polyester being 100 wt%, an amount of the chemically regenerated polyester resin is larger than or equal to 5 wt%.

Therefore, the technical features of "preparing a polyester composition including the physically regenerated polyester resin and the chemically regenerated polyester resin" and "the weight ratio of the chemically regenerated polyester resin being larger than or equal to 5 wt%" can improve the appearance and the color of the polyester products made by the recycled polyester resin.

### DETAILED DESCRIPTION OF THE EXEMPLARY EMBODIMENTS

The present disclosure provides a polyester film and a method for manufacturing the polyester film so as to process a large quantity of recycled polyester plastic. Moreover, the polyester film is manufactured by a regenerated polyester resin and has a high proportion of the regenerated polyester resin. In the polyester film and the method for manufacturing the polyester film of the present disclosure, both of the physically regenerated polyester resin and the chemically regenerated polyester resin are used. The physically regenerated polyester resin is reproduced from the recycled polyester plastic through a physical method and the chemically regenerated polyester resin is reproduced from the recycled polyester plastic through a chemical method. Further, the polyester film and the method for manufacturing the polyester film of the present disclosure can be manufactured and carried out by using only the recycled polyester plastic without adding other polyester virgin resin.

In order to obtain the recycled plastic, various plastic wastes are collected and classified according to types, colors, and purposes at first. Then, the plastic wastes are compressed, packaged, and transferred to a treatment plant. In the embodiment, a material of the recycled plastic is PET, but is not limited thereto.

Subsequently, caps, labels, and adhesives on the recycled plastic are removed. After separating non-recyclable objects (i.e., caps, labels, and adhesives) from the recycled plastic, the recycled plastic is fragmented into plastic pieces. These plastic pieces are classified into bottlenecks, pads, and bottle bodies according to material by floatation. After drying these plastic pieces, bottle chips are obtained. In other embodiments, the bottle chips also can be obtained by purchasing.

Then, a part of the bottle chips is physically reproduced to obtain the physically regenerated polyester resin. Another part of the bottle chips is chemically reproduced to obtain the chemically regenerated polyester resin. Specific steps of the physical reproduction and chemical reproduction are illustrated below.

### [Physical reproduction]

In a process of the physical reproduction, the bottle chips are cut into pieces to shorten a processing time for melting the bottle chips. Then, the bottle chips are fused and granulated by a single screw extruder or a double screw extruder so that the physically regenerated polyester resin can be produced. In other words, through the steps of cutting, fusion, and extrusion, polyester molecules of the bottle chips are rearranged and the bottle chips are reshaped into the physically regenerated polyester resin. It should be noted that, instead of being recombined, the polyester molecules are only rearranged in the process of the physical reproduction. Components originally included in the recycled plastic (e.g., metallic catalysts, lubricants, antioxidants, or additives, used for synthesizing polyester) still exist in the physically regenerated polyester resin.

Moreover, in the process of the physical reproduction, an organic additive can be added and mixed with the bottle chips to obtain the physically regenerated polyester resin. In the process, holes will be formed between a PET polyester resin and the organic additive due to incompatibility between the organic additive and the polyester film. Accordingly, the polyester film is white and matte, and a density of the polyester film is reduced. Specifically, the organic additive can be selected from the group consisting of polyethylene (PE), polypropylene (PP), poly(4-methylpentene) (TRX), and any combination thereof, but is not limited thereto.

In other embodiments, in the process of the physical reproduction, a lubricant can also be added and mixed with the bottle chips to obtain the physically regenerated polyester resin. The lubricant can be selected from the group consisting of silicon dioxide, polystyrene, polymethyl methacrylate, silicone rubber, acrylic, and any combination thereof. A particle size of the lubricant is larger than 2 µm.

### [Chemical reproduction]

In a process of the chemical reproduction, the bottle chips are cut into pieces to shorten the processing time for melting the bottle chips. Then, the bottle chips are added to a chemical depolymerizing solution. A molecular chain of the polyester will be broken and then a polyester monomer with a shorter molecular chain and an oligomer can be obtained so as to achieve an effect of depolymerization. In the embodiment, the chemical depolymerizing solution can include formic acid, methanol, acetic acid, ethanol, ethylene glycol, propionic acid, malonic acid, acetone, butanone, toluene, and any combination thereof, but is not limited thereto. In a preferable embodiment, the chemical depolymerizing solution includes ethylene glycol. In addition, the depolymerization of the recycled plastic can be carried out in a vacuum environment to remove a vaporized or volatile organic impurity. Therefore, the impurity in the chemically regenerated polyester resin can be reduced and a raw material mixture can be obtained.

Subsequently, a separation step and a purification step are carried out upon the raw material mixture so that a content of the monomer and/or the oligomer in the raw material mixture can be increased. At a specific reaction condition, the monomer and/or the oligomer in the raw material mixture can be repolymerized to form the chemically regenerated polyester resin. In other words, the polyester molecules can be depolymerized into molecules with shorter molecular chains and then be repolymerized into new polyester molecules in the process of chemical reproduction.

In other embodiments, the method for manufacturing the chemically regenerated polyester resin is not limited to that disclosed herein. The chemically regenerated polyester resin also can be manufactured by a hydrolysis method or a supercritical fluid method. In the hydrolysis method, the bottle chips are depolymerized in a basic solution. By regulating a predetermined temperature and a predetermined pressure, the polyester molecules can be completely depolymerized into monomers under an irradiation of microwave. In the supercritical fluid method, the polyester molecules can be depolymerized into a small amount of monomers and oligomers in a supercritical methanol. A yield of the monomers and oligomers is influenced by a reaction temperature and reaction time.

In a repolymerizing process of the chemical reproduction, a moderate amount of the additive can be added to the raw material mixture so as to adjust properties (e.g., a lubricant property, an antistatic and adhesive property, a haze, a color, a degradability, and strength) of the chemically regenerated polyester resin.

For example, in the repolymerizing process of the chemical reproduction, the lubricant property and an optical property of the chemically regenerated polyester resin can be adjusted by adding the lubricant to the raw material mixture so that the chemically regenerated polyester resin with a predetermined transparency can be manufactured. The lubricant can be: silicon dioxide, polystyrene, polymethyl methacrylate, silicon rubber, acrylic, or any combination thereof, but is not limited thereto. In the embodiment, a shape of the lubricant is spherical and the lubricant has a high transparency. A particle size of the lubricant is smaller than 2 µm.

In the repolymerizing process of the chemical reproduction, the haze of the chemically regenerated polyester resin can be adjusted by adding a matte additive in the raw material mixture so that a chemically regenerated polyester resin with a predetermined haze can be manufactured. The matte additive can be: silicon dioxide, organic compound, silicon rubber, acrylic, or any combination thereof, but is not limited to. In a preferable embodiment, a shape of the matte additive is spherical so that light can be scattered by the matte additive.

In the repolymerizing process of the chemical reproduction, the color of the chemically regenerated polyester resin can be adjusted by adding a colored pigment to the raw material mixture so as to meet requirements of various polyester products. For example, a black chemically regenerated polyester resin can be manufactured by adding a black pigment to the raw material mixture. In addition, besides the colored pigment, a colored compound also can be added to the raw material mixture. For example, a white chemically regenerated polyester resin can be manufactured by adding a white compound to the raw material mixture.

The white compound can be a white inorganic compound such as: titanium dioxide, barium sulfate, calcium carbonate, or any combination thereof. Adding the white compound can not only adjust the color of the chemically regenerated polyester resin but also adjust physical properties of the polyester film. For example, an amount of the titanium dioxide will influence the haze of the polyester film and an amount of the barium sulfate and calcium carbonate will influence a surface gloss of the polyester film. In a preferable embodiment, the white compound includes titanium dioxide, barium sulfate, and calcium carbonate at the same time. Based on a total weight of the white compound, the amount of the titanium dioxide ranges from 0.01 wt% to 80 wt%, the amount of the barium sulfate ranges from 0.01 wt% to 80 wt%, and the amount of the calcium carbonate ranges from 0.01 wt% to 80 wt%.

In the repolymerizing process of the chemical reproduction, a degradable material can be added to the raw material mixture so that an amount of the recycled plastic needed to be processed in the future can be reduced. The degradable material can be a biopolymer, a natural material, or a mixture of the biopolymer and the natural material. Specifically, the biopolymer can be but not limited to: starch, cellulous, chitin, polylactic acid (PLA), polyglycolic acid (PGA), polyhydroxyalkanoate (PHA), polyhydroxybutyrate (PHB), polyhydroxyvalerate (PHV), polyhydroxycaproate (PHC), polyhydroxyheptanoate (PHH), poly(3-hydroxybutyrate-co-3-hydroxyvalerate (PHBV), polycaprolactone (PCL), polybutylenesuccinate (PBS), polybutylene succinate/adipate (PBSA), polybutylene succinate/terephthalate (PBST), polybutylene succinate/butylene fumarate (PBAT), polyestercarbonate (PEC), polyethylene succinate (PES), polybutylene adipate/terephthalate (PBAT), polytetramethylene adipate/terephthalate (PTMAT), polyvinyl alcohol (PVA), or any combination thereof. The natural material can be but not limited to: natural rubber, lignin, coffee, tea, cocoa, lemongrass, rough rice, flower, turmeric, leaves, wood, sugar cane, coconut shell, corn, seeds, sweet potato, pomelo peel, or any combination thereof.

Accordingly, the chemically regenerated polyester resin with various properties can be manufactured by adding different additives mentioned previously. Further, the physically regenerated polyester resin and the chemically regenerated polyester resin with various properties can respectively be manufactured according to the physical reproduction and the chemical reproduction mentioned previously. Consequently, various polyester products, such as a polyester film, can be manufactured by selecting a specific chemically regenerated polyester resin, and adjusting the proportion of the physically regenerated polyester resin and the chemically regenerated polyester resin.

After the physical reproduction and the chemical reproduction, the physically regenerated polyester resin and the chemically regenerated polyester resin of the present disclosure can be used to prepare a polyester composition. The polyester composition includes the physically regenerated polyester resin and the chemically regenerated polyester resin. By adjusting the proportion of the physically regenerated polyester resin and the chemically regenerated polyester resin, the polyester composition can be used to manufacture various polyester products. Based on a total weight of the regenerated polyester resin (the physically regenerated polyester resin and the chemically regenerated polyester resin) being 100 wt%, the amount of the chemically regenerated polyester resin is larger than or equal to 5 wt%. The chemically regenerated polyester resin can be selected according to different requirements and purposes of the polyester film.

For example, whilst manufacturing a transparent polyester film, a specific physically regenerated polyester resin or chemically regenerated polyester resin can be used as a base material so that the polyester composition (including the physically regenerated polyester resin and the chemically regenerated polyester resin) can contain 0.01 wt% to 1 wt% of the lubricant. In other words, the lubricant is first mixed with the chemically regenerated polyester resin, and then usages of the chemically regenerated polyester resin and the physically regenerated polyester resin are adjusted, so that the polyester composition can contain 0.01 wt% to 1 wt% of the lubricant. In the embodiment, the transparency of the transparent polyester film is larger than or equal to 85 %. If components and an amount of the lubricant are further controlled, the haze of the transparent polyester film can be smaller than or equal to 5 %.

When manufacturing a colored polyester film with various colors, the specific physically regenerated polyester resin or chemically regenerated polyester resin can be used as a base material so that the polyester composition can contain 10 ppm to 10 wt% of the colored pigment. For example, when the black polyester film is manufactured, the polyester composition can contain 10 ppm to 10 wt% of the black pigment. Besides the colored pigment, a colored compound can also be added to the polyester composition. For example, when a white polyester film is manufactured, the polyester composition can contain 5 wt% to 40 wt% of white compounds. As mentioned previously, the haze and the surface gloss of the polyester film will also be influenced by the colored compound and contents of the colored compound. In a preferable embodiment, based on the total weight of the white compound being 100 wt%, the amount of the titanium dioxide ranges from 0.01 wt% to 80 wt%, the amount of the barium sulfate ranges from 0.01 wt% to 80 wt%, and the amount of the calcium carbonate ranges from 0.01 wt% to 80 wt%.

When manufacturing a matte polyester film, the specific physically regenerated polyester resin or chemically regenerated polyester resin can be used as a base material and the polyester composition can contain 500 ppm to 20 wt% of matte additive. The matte additive can exist in a particle form. The haze of the matte polyester film can range from 0.1 % to 90 %.

When manufacturing a degradable polyester film, the specific physically regenerated polyester resin or chemically regenerated polyester resin can be used as a base material so that the polyester composition can contain 5 wt% to 90 wt% of the degradable material so as to enhance the degradability of the polyester film.

In conclusion, the present disclosure provides the polyester film and the method for manufacturing the polyester film. The technical features of "preparing a polyester composition including the physically regenerated polyester resin and the chemically regenerated polyester resin" and "the weight ratio of the chemically regenerated polyester resin being larger than or equal to 5 wt%" can improve the appearance and the color of the polyester products made by the regenerated polyester resin. The polyester film with different properties can be manufactured by selecting different chemically regenerated polyester resin according to various requirements and purposes, and adjusting the usages of the physically regenerated polyester resin and the chemically regenerated polyester resin.

## Claims

1. A method for manufacturing a polyester film by using a recycled plastic material, comprising steps of:
physically reproducing a part of the recycled plastic material to obtain a physically regenerated polyester resin;
chemically reproducing another part of the recycled plastic material to obtain a chemically regenerated polyester resin;
preparing a polyester composition including the physically regenerated polyester resin and the chemically regenerated polyester resin; based on a total weight of the polyester composition being 100 wt%, a weight of the chemically regenerated polyester resin being larger than or equal to 5 wt% of the polyester composition; and
manufacturing the polyester film by using the polyester composition; based on a total weight of the polyester film being 100 wt%, a total amount of the physically regenerated polyester resin and the chemically regenerated polyester resin ranging from 10 wt% to 100 wt%.

2. The method according to claim 1, wherein based on the total weight of the polyester composition being 100 wt%, the amount of the physically regenerated polyester resin ranges from 10 wt% to 90 wt% and the amount of the chemically regenerated polyester resin ranges from 10 wt% to 90 wt%.

3. The method according to claim 1, wherein the step of chemically reproducing another part of the recycled plastic material further includes:
depolymerizing the recycled plastic material to obtain a raw material mixture; and
repolymerizing the raw material mixture to obtain the chemically regenerated polyester resin.

4. The method according to claim 3, wherein the step of repolymerizing the raw material mixture further includes: adding an antistatic adhesive to the raw material mixture and then repolymerizing the raw material mixture; the antistatic adhesive being a complex including alkaline metal or alkaline earth metal.

5. The method according to claim 3, wherein the step of repolymerizing the raw material mixture further includes: adding a lubricant to the raw material mixture and then repolymerizing the raw material mixture; the lubricant being selected from the group consisting of silicon dioxide, polystyrene, polymethyl methacrylate, silicone rubber, acrylic, and any combination thereof; the polyester composition further including 0.01 wt% to 1 wt% of the lubricant, so that a transparency of the polyester film is larger than or equal to 85 %; and a particle size of the lubricant is smaller than 2 µm.

6. The method according to claim 5, wherein a haze of the polyester film is smaller than or equal to 5 %.

7. The method according to claim 3, wherein the step of repolymerizing the raw material mixture further includes: adding a colored pigment to the raw material mixture and then repolymerizing the raw material mixture; the polyester composition further including 10 ppm to 10 wt% of the colored pigment.

8. The method according to claim 3, wherein the step of repolymerizing the raw material mixture further includes: adding a white compound to the raw material mixture and then repolymerizing the raw material mixture; the polyester composition further including 5 wt% to 40 wt% of the white compound.

9. The method according to claim 8, wherein the white compound is selected from the group consisting of titanium dioxide, barium sulfate, calcium carbonate, and any combination thereof.

10. The method according to claim 9, wherein the white compound includes titanium dioxide, barium sulfate, and calcium carbonate; an amount of titanium dioxide in the white compound ranges from 0.01 wt% to 80 wt%, an amount of barium sulfate in the white compound ranges from 0.01 wt% to 80 wt%, and an amount of calcium carbonate in the white compound ranges from 0.01 wt% to 80 wt%.

11. The method according to claim 3, wherein the step of repolymerizing the raw material mixture further includes: adding a matte additive and then repolymerizing the raw material mixture; the matte additive being selected from the group consisting of silicon dioxide, silicon rubber, acrylic, and any combination thereof; the polyester composition including 500 ppm to 20 wt% of the matte additive so that the haze of the polyester film ranges from 0.1 % to 90 %.

12. The method according to claim 3, wherein the step of repolymerizing the raw material mixture further includes: adding a degradable material to the raw material mixture and then repolymerizing the raw material mixture; the polyester composition including 5 wt% to 90 wt% of the degradable material.

13. The method according to claim 1, wherein the step of physically reproducing a part of the regenerated plastic material further includes: adding a lubricant to the regenerated plastic material; a particle size of the lubricant being larger than 2 µm.

14. The method according to claim 1, wherein the step of physically reproducing a part of the recycled plastic material further includes: adding an organic additive to the recycled plastic material; the recycled plastic material being selected from the group consisting of: polyethylene, polypropylene, poly(4-methylpentene), and any combination thereof.

15. A polyester film manufactured by the method as claimed in claim 1, comprising: 10 wt% to 100 wt% of a regenerated polyester resin including a physically regenerated polyester resin and a chemically regenerated polyester resin; based on a total weight of the regenerated polyester resin being 100 wt%, an amount of the chemically regenerated polyester resin being larger than or equal to 5 wt%.
